(19) Europäisches Patentamt / European Patent Office / Office européen des brevets

(11) **EP 3 944 979 B1**

(12) **EUROPEAN PATENT SPECIFICATION**

(45) Date of publication and mention
of the grant of the patent:
**16.07.2025   Bulletin 2025/29**

(21) Application number: **20208911.6**

(22) Date of filing: **20.11.2020**

(51) International Patent Classification (IPC):
***B60L 3/00*** *(2019.01)*

(52) Cooperative Patent Classification (CPC):
**B60L 3/0084;** B60L 2240/421; B60L 2240/423;
Y02T 10/64; Y02T 10/72

(54) **TORQUE CONTROL METHOD FOR CONTROLLING DRIVING TORQUE OF AN ELECTRIC VEHICLE AND RELATED DEVICE**

VERFAHREN ZUR DREHMOMENTREGELUNG ZUR STEUERUNG DES ANTRIEBSMOMENTS EINES ELEKTROFAHRZEUGS UND ZUGEHÖRIGE VORRICHTUNG

PROCÉDÉ DE RÉGLAGE DE COUPLE POUR RÉGLER LE COUPLE MOTEUR D'UN VÉHICULE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **29.07.2020   CN 202010744643**

(43) Date of publication of application:
**02.02.2022   Bulletin 2022/05**

(73) Proprietor: **SAIC MOTOR Corporation Limited**
**Shanghai 201203 (CN)**

(72) Inventors:
  • **PENG, Bo**
    **Shanghai, 200438 (CN)**
  • **XIE, Jiayue**
    **Shanghai, 200438 (CN)**
  • **ZHU, Jianwei**
    **Shanghai, 200438 (CN)**
  • **GU, Mengjun**
    **Shanghai, 200438 (CN)**
  • **CAO, Bin**
    **Shanghai, 200438 (CN)**
  • **WEI, Yu**
    **Shanghai, 200438 (CN)**
  • **ZHANG, Qiang**
    **Shanghai, 200438 (CN)**
  • **SUN, Xiliang**
    **Shanghai, 200438 (CN)**
  • **JIANG, Yanyan**
    **Shanghai, 200438 (CN)**
  • **XIE, Moyu**
    **Shanghai, 200438 (CN)**
  • **WU, Qiang**
    **Shanghai, 200438 (CN)**
  • **WANG, Huan**
    **Shanghai, 200438 (CN)**

(74) Representative: **Lippert Stachow Patentanwälte Rechtsanwälte Partnerschaft mbB**
**Postfach 30 02 08**
**51412 Bergisch Gladbach (DE)**

(56) References cited:
**EP-A1- 3 040 233        JP-A- 2018 125 958**
**US-A1- 2017 066 326**

## Description

**Torque Control Method for Controlling Torque of an Electric Vehicle and Related Device**

### Technical field

The invention relates to the field of automobile safety technologies, and in particular to a torque control method for controlling driving torque of an electric vehicle and a related device.

### Background Art

With the development of automobile technologies, safety in driving an automobile has become one of important concerns for people who drive the automobile. Driving torque is an important factor that affects the driving of the automobile, and whether the torque can be safely controlled or not directly affects the safety of the automobile.

In the related art, the driving torque is adjusted by a torque controller in an electric vehicle. This results in a lower fault tolerance rate and a poor safety of torque control.

US2017066326A1 discloses a vehicle torque control method for an electric vehicle.

### Summary of the Invention

The invention is defined in the independent claims appended to this specification.

In order to solve the above technical problems, the invention provides a vehicle driving torque control method for controlling driving torque of an electric vehicle in which a processing device can judge whether a shut-off signal sent by a first or second torque controller is obtained respectively so that a redundant system is formed by the two torque controllers, thereby avoiding that the torque cannot be accurately controlled due to the damage of one torque controller and improving the safety and reliability of the torque control.

Embodiments of the invention disclose the following technical solutions.

In a first aspect, the embodiments of the invention provide a torque control method for controlling driving torque of an electric vehicle including the steps of:

performing a first judgment to judge whether a first shut-off signal sent by a first torque controller is obtained;

performing a second judgment to judge whether a second shut-off signal sent by a second torque controller is obtained; and

outputting a first stop signal to stop outputting a torque if the judgment result of at least one of the first judgment and the second judgment is yes.

Optionally, the first shut-off signal is generated by the steps of:

judging whether the absolute value of an actual torque value of a target vehicle is not less than the absolute value of a torque abnormality threshold by the first torque controller, wherein the torque abnormality threshold is determined according to a torque request value and a torque deviation threshold; and

generating and sending out the first shut-off signal by the first torque controller if the absolute value of the actual torque value is not less than the absolute value of the torque abnormality threshold; and

the second shut-off signal is generated by the steps of:

judging whether the absolute value of the actual torque value is not less than the absolute value of the torque abnormality threshold by the second torque controller; and

generating and sending out the second shut-off signal by the second torque controller if the absolute value of the actual torque value is not less than the absolute value of the torque abnormality threshold.

Optionally, the torque deviation threshold is determined according to electric vehicle parameters corresponding to the target vehicle.

According to the invention, the method further includes, before performing the first judgment, the steps of:

performing a third judgment to judge whether a first short circuit signal sent by the first torque controller is obtained;
performing a fourth judgment to judge whether a second short circuit signal sent by the second torque controller is obtained; and
converting the first stop signal into a second stop signal to shut off electric vehicle power of the target vehicle if the judgment result of at least one of the third judgment and the fourth judgment is yes.

The first short circuit signal is generated by the steps of:

judging whether the absolute value of an electric motor rotation speed of the target vehicle is not less than the absolute value of an electric motor rotation speed threshold by the first torque controller; and
generating the first short circuit signal if the absolute value of the motor rotation speed is not less than the absolute value of the motor rotation speed threshold; and

the second short circuit signal is generated by the steps of:

> judging whether the absolute value of the motor rotation speed is not less than the absolute value of the motor rotation speed threshold by the second torque controller; and
> generating the second short circuit signal if the absolute value of the motor rotation speed is not less than the absolute value of the motor rotation speed threshold.

Optionally, the motor rotation speed threshold is determined according to motor parameters of the target vehicle.

Optionally, the first shut-off signal comprises: a first logic shut-off signal, a first buffer shut-off signal, and a first drive shut-off signal; and the second shut-off signal comprises:

a second logic shut-off signal, a second buffer shut-off signal, and a second drive shut-off signal; wherein outputting the first stop signal if the judgment result of the at least one of the first judgment and the second judgment is yes specifically includes:

> the first stop signal including a logic stop signal to stop a logic device from outputting a torque pulse if the first logic shut-off signal or the second logic shut-off signal is obtained;
> the first stop signal including a buffer stop signal to stop a buffer device from outputting the torque pulse if the first buffer shut-off signal or the second buffer shut-off signal is obtained;
> the first stop signal including a drive stop signal to stop a drive device from outputting the torque pulse if the first drive shut-off signal or the second drive shut-off signal is obtained.

The invention equally provides for a vehicle driving torque control device for controlling driving torque of an electric vehicle, which device is configured to perform the said vehicle driving torque control method.

It can be seen from the above technical solutions that the invention provides the torque control method in which the processing device can judge whether the first shut-off signal sent by the first torque controller or the second shut-off signal sent by the second torque controller is obtained respectively. If the processing device judges that at least one of the signals has been obtained, then outputs the first stop signal to stop outputting the torque. The processing device can receive the signals of the first and second torque controllers so that a redundant system is formed between the two torque controllers. If either one of the controllers is damaged, the processing device can still perform the torque control by means of the other controller, thereby improving the safety of the torque control and reducing the probability of risks in the process of driving a vehicle.

## Brief Description of the Drawings

In order to illustrate the technical solutions in embodiments of the invention or the prior art more clearly, the drawings required to be used for the embodiments or the prior art will be briefly described now. Obviously, the drawings described now only represent some embodiments of the invention. For those of ordinary skill in the art, other embodiments can be conceived based on these drawings without creative work.

> FIG. 1 is a flowchart of a part of a torque control method for controlling driving torque of an electric vehicle provided by an embodiment of the invention;
> FIG. 2 is a schematic diagram of a torque control method for controlling driving torque of an electric vehicle in an actual application scenario provided by an embodiment of the invention;
> FIG. 3 is a schematic diagram of a part of a torque control method for controlling driving torque of an electric vehicle in an actual application scenario provided by an embodiment of the invention;
> FIG. 4 is a schematic diagram of a torque control method for controlling driving torque of an electric vehicle in an actual application scenario provided by an embodiment of the invention;
> FIG. 5 is a schematic diagram of a part of a torque control method for controlling driving torque of an electric vehicle in an actual application scenario provided by an embodiment of the invention; and
> FIG. 6 is a structural block diagram of a torque control device for controlling driving torque of an electric vehicle provided by an embodiment of the invention.

## Detailed Description of Preferred Embodiments

The embodiments of the invention will be described now with reference to the drawings.

Driving torque control is one of important factors related to safety in driving an automobile. If the torque control fails, the automobile may encounter a series of problems, such as the speed of the automobile is unable to be adjusted or the automobile is unable to be controlled sensitively, seriously threatening the personal safety of users.

In the related art, the driving torque control is performed by a torque controller in an electric vehicle. There is only one torque controller in one vehicle. Thus, when the torque controller breaks down, it will become impossible to control the torque of the vehicle well. As a result, the safety of the vehicle deteriorates.

In order to solve the above-mentioned technical problems, the invention provides a torque control method for controlling driving torque of an electric vehicle in which a processing device can judge whether a shut-off signal sent by a first or second torque controller is obtained respectively so that a redundant system is formed between the two torque controllers, thereby avoiding that the torque cannot be accurately controlled due to the damage of one torque controller and improving the safety and reliability of the torque control.

It can be understood that the method can be applied by the processing device with a torque control function, such as a terminal device or a server. The method can be executed by the terminal device or the server separately, or can also be executed by a network scenario where the terminal device and the server communicate and cooperate with each other. The terminal device may be a computer or the like. The server can be understood as an application server or a web server. In an actual deployment, the server can be an independent server or a cluster server. While the technical solutions can be implemented in a hardware environment such as an ARM processor and an X86 processor, the technical solutions also can be implemented in a software environment such as an Android platform, Windows XP and above operation systems or a Linux operation system.

The torque control method provided by the embodiments of the invention will be described now with reference to the drawings.

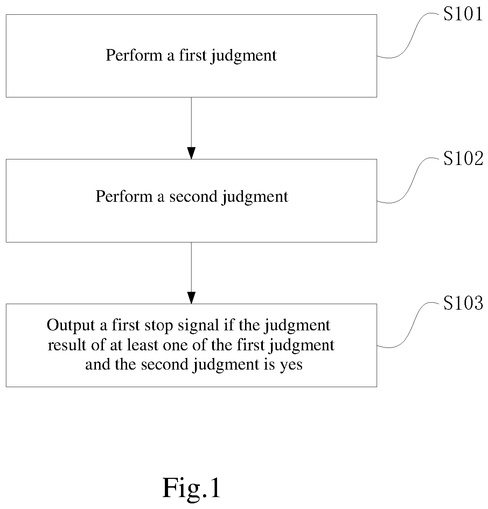

Referring to FIG. 1 which is a flowchart of a part of a torque control method for controlling driving torque of an electric vehicle provided by an embodiment of the invention, the method includes: S101: performing a first judgment.

In the process of driving an electric vehicle, a torque controller in the vehicle will send out various signals for torque control, among which, a shut-off signal to shut off a subsequent adjustment of the torque is sent out when the torque of the vehicle is abnormal, for example, when a present actual torque of the vehicle far exceeds a torque requested in the vehicle, in order to prevent a danger of driving the vehicle.

In the embodiment of the invention, in order to achieve a redundant control of the torque, two torque controllers, e.g., two torque control chips, namely first and second torque controllers, may be provided in a target vehicle. The two torque controllers can monitor and analyze driving conditions of the target vehicle and determine whether the present torque of the target vehicle is abnormal. Multiple ways may be used by the torque controllers to judge whether the torque is abnormal. In a possible implemented way, the torque controllers may determine the actual torque of the target vehicle by means of a three-phase current and a rotor position corresponding to the target vehicle.

When an abnormal torque occurs but the first and second torque controllers can operate properly, the first and second torque controllers both can send the shut-off signal to a processing device. The processing device may perform a first judgment to judge whether a first shut-off signal sent by the first torque controller is obtained.

S102: performing a second judgment.

In order to avoid that the torque can't be effectively controlled due to a failure of the first torque controller, the processing device may further perform a second judgment to judge whether a second shut-off signal sent by the second torque controller is obtained.

S103: outputting a first stop signal if the judgment result of at least one of the first judgment and the second judgment is yes.

In order to achieve the redundant control of the torque, after the processing device performs the first judgment and the second judgment and as long as one of judgment results is yes, it means that the shut-off signal sent by the first or second torque controller has been obtained. It proves that the torque of the target vehicle is abnormal. Thus, in order to prevent the abnormal torque from causing harm to the process of driving the vehicle, the processing device may output the first stop signal to stop outputting a torque.

It can be seen from the above technical solutions that the invention provides the torque control method in which the processing device is configured to judge whether the first shut-off signal sent by the first torque controller or the second shut-off signal sent by the second torque controller is obtained respectively. If the processing device judges that the at least one of the signals has been obtained, then outputs the first stop signal to stop outputting the torque. The processing device can receive the signals of the first and second torque controllers so that a redundant system is formed between the two torque controllers. If either one of the controllers is damaged, the processing device can still perform the torque control by means of the other controller, thereby improving the safety of the torque control and reducing the probability of risks in the process of driving the vehicle.

It can be understood that there are multiple ways to judge whether the torque is abnormal. According to the invention, the first shut-off signal is generated by the steps of judging whether the absolute value of an actual torque value of the target vehicle is not less than the absolute value of a torque abnormality threshold by the first torque controller. The torque abnormality threshold is a threshold for identifying that the torque of the vehicle is in an abnormal state, and the torque abnormality threshold can be determined according to a torque request value and a torque deviation threshold. The torque request value refers to a torque value actually requested in the target vehicle when performing the torque control and the torque deviation threshold refers to a maximum value that the actual torque of the target vehicle can be deviated from the torque request value in a normal condition.

If the absolute value of the actual torque value is not less than the absolute value of the torque abnormality threshold, it means that the actual torque value of the target vehicle has reached the maximum value that can be deviated in the normal condition, and it can be judged that the torque of the target vehicle is in an abnormal state. The first torque controller may generate and send out the first shut-off signal.

Similarly, the second shut-off signal is generated by the steps of: judging whether the absolute value of the actual torque value is not less than the absolute value of the torque abnormality threshold by the second torque controller; and generating and sending out the second shut-off signal by the second torque controller if the absolute value of the actual torque value is not less than the absolute value of the torque abnormality threshold.

Because structures and performances, e.g., electric motor models, of different electric vehicles may be different, each vehicle can have a different allowable torque deviation value. In a possible implemented way, the processing device may determine the torque deviation threshold according to electric vehicle parameters corresponding to the target vehicle in order to improve the accuracy of the torque control.

It is understood that the processing device monitors an electric motor rotation speed of the target vehicle in addition to the torque value when performing the torque control in order to further improve the safety of the vehicle. When the torque control is performed, a sudden stop of outputting the torque may bring certain risks to the vehicle if the present vehicle is at a high speed. Thus, the processing device judges a present speed of the target vehicle when performing the torque control.

Similarly, the processing device judges the vehicle speed in a redundant way in order to improve a fault tolerance rate of the judgment. The processing device is configured to perform a third judgment to judge whether a first short circuit signal sent by the first torque controller is obtained and a fourth judgment to judge whether a second short circuit signal sent by the second torque controller is obtained. The first and second short circuit signals are both used to identify that the present vehicle speed is in an excessively high state so that electric vehicle power is required to be short circuited to decrease the vehicle speed to a stable state. Thus, if the judgment result of at least one of the third judgment and the fourth judgment is yes, it means that the vehicle speed is required to be controlled and the processing device can convert the first stop signal into a second stop signal to shut off the vehicle power of the target vehicle. Thus, when the vehicle speed is too high, the processing device can avoid directly adjusting the torque, but indirectly realize the torque control by controlling the vehicle speed.

The torque controller can judge the vehicle speed in multiple ways. According to the invention, since driving the vehicle is realized by rotating an electric motor, the speed of the target vehicle can be determined by the motor rotation speed. The first short circuit signal is generated by the steps of: judging whether the absolute value of the motor rotation speed of the target vehicle is not less than the absolute value of an electric motor rotation speed threshold by the first torque controller. If the absolute value of the motor rotation speed is not less than the absolute value of the motor rotation speed threshold, it means that the motor rotation speed is too high so that the first short circuit signal can be generated. Similarly, in order to achieve the redundant control, the second torque controller also judges whether the absolute value of the motor rotation speed is not less than the absolute value of the motor rotation speed threshold. If the absolute value of the motor rotation speed is not less than the absolute value of the motor rotation speed threshold, the second torque controller can generate the second short circuit signal.

It is understood that because electric motor models of different electric vehicles can be different, motor rotation speed thresholds corresponding to the different vehicles can be different. In order to improve the accuracy of the torque control method, the processing device may determine the motor rotation speed threshold according to electric motor parameters of the target vehicle.

In addition, in order to be able to control torque parameters finely, the processing device can analyze torque control architecture of the vehicle, so as to output the shut-off signal in a targeted manner. For example, the vehicle torque control architecture may include a logic device, a buffer device, and a drive device. These three devices are connected with each other in a linear manner and output the torque by transmitting a torque pulse. If the pulse transmission of any one of the devices is shut off, outputting the torque will be stopped. Thus, in order to further improve a success rate of the torque control, the processing device can control these three devices separately.

In a possible implemented way, the above-mentioned first shut-off signal may comprise any one or a combination of a first logic shut-off signal, a first buffer shut-off signal, and a first drive shut-off signal, and the second The shut-off signal may comprise any one or a combination of a second logical shut-off signal, a second buffer shut-off signal, and a second drive shut-off signal. If the processing device obtains the first or second logical shut-off signal, the outputted first stop signal may include a logical stop signal to stop the logic device from outputting the torque pulse. If the processing device obtains the first or second buffer shut-off signal, the outputted first stop signal may include a buffer stop signal to stop the buffer device from outputting the torque pulse. If the first drive shut-off signal obtains the first or second drive shut-off signal, the outputted first stop signal may include a drive stop signal to stop the drive device from outputting the torque pulse.

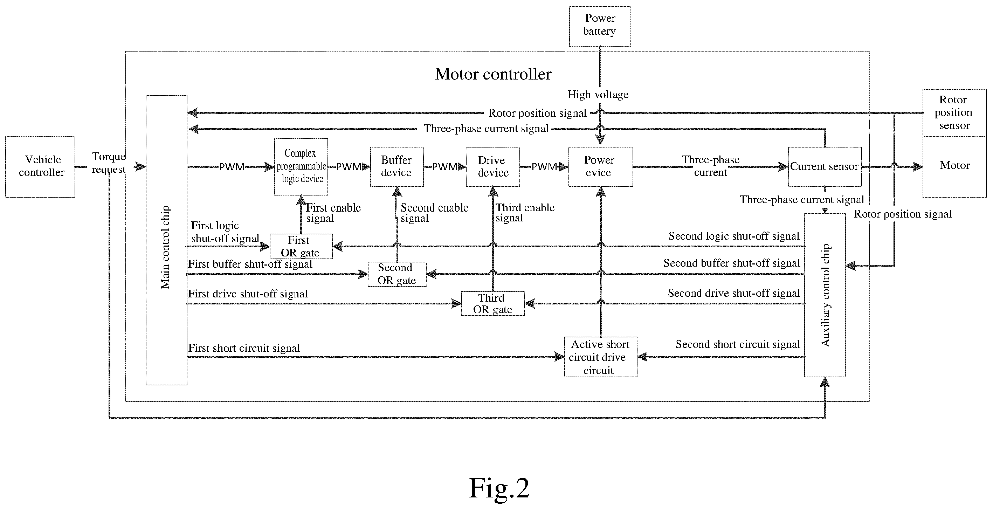

The vehicle driving torque control method in an actual application scenario provided by an embodiment of the invention will be described now. Refer to FIG. 2 which is a schematic diagram of the torque control method in the actual application scenario provided by the embodiment of the invention. In the actual application scenario, the processing device is an electric motor controller to control the torque of the vehicle.

The motor controller has a main control chip and an auxiliary control chip, and the auxiliary control chip is configured to provide a redundant control function to the torque control. In the process of adjusting the torque, the motor controller can first receive a torque request and adjust the torque of the vehicle according to the torque request. Both of the main and auxiliary control chips can receive a rotor position signal sent by a rotor position sensor and a three-phase current signal sent by a current sensor, and determine an actual torque of an electric motor according to the signals. In the meanwhile, the main and auxiliary control chips can analyze the rotor position to determine the present motor rotation speed.

Upon determining the actual torque and the motor rotation speed, the main and auxiliary control chips judge whether to send a signal based on this information. The judgment process is set forth as below.

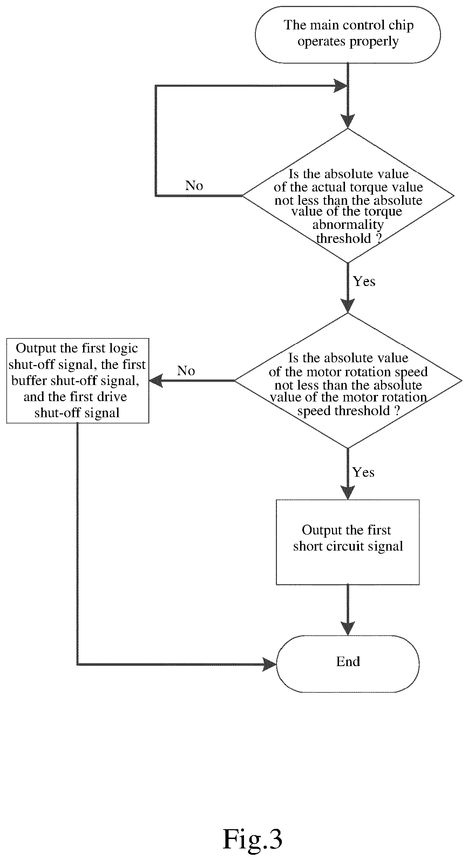

The main and auxiliary control chips determine whether the absolute value of the actual torque is not less than the absolute value of the torque abnormality threshold according to the determined actual torque and whether the absolute value of the motor rotation speed is not less than the absolute value of the motor rotation speed threshold. Taking the main control chip as an example, the judgment process of the main control chip is shown in FIG. 3:

The main control chip first determines whether the absolute value of the actual torque of the motor is not less than the absolute value of the torque abnormality threshold, and then determines whether the absolute value of the motor rotation speed is not less than the absolute value of the motor rotation speed threshold if the absolute value of the actual torque is not less than the absolute value of the torque abnormality threshold. If the absolute value of the motor rotation speed is not less than the absolute value of the motor rotation speed threshold, the first short circuit signal is directly outputted. If the absolute value of the motor rotation speed is less than the absolute value of the motor rotation speed threshold, the first logic shut-off signal, the first buffer shut-off signal and the first drive shut-off signal are outputted.

A specific judgment result is set forth in the following formula:

$$\begin{cases} T_{a1} \geq T_r + \Delta \mathrm{T} \\ \mathrm{n}_1 \geq \mathrm{n}_t \end{cases} \quad \text{or} \quad \begin{cases} T_{a1} \leq -\left(T_r + \Delta T\right) \\ n_1 \leq -n_t \end{cases}$$

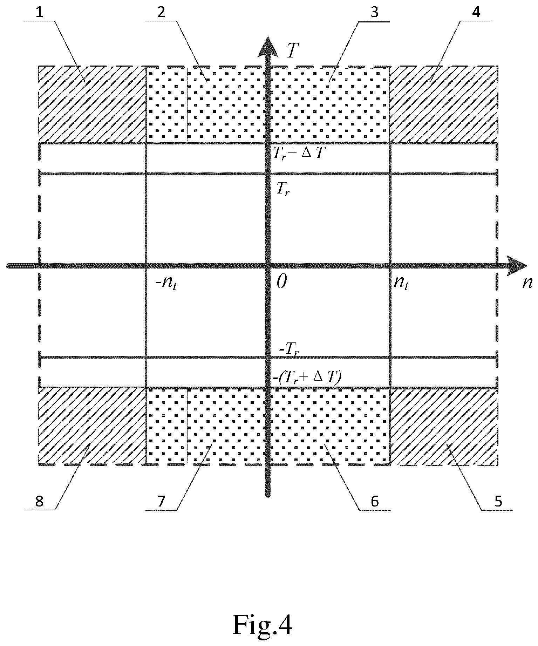

where $T_{a1}$ is the actual torque of the motor determined by the main control chip and measured in Nm; $T_r$ is the torque request value and measured in Nm; $\Delta T$ is the torque deviation threshold and measured in Nm; $n_1$ is the motor rotation speed determined by the main control chip and measured in rpm; and $n_t$ is the motor rotation speed threshold and measured in Nm. In the above case, the absolute value of the actual torque is not less than the absolute value of the torque abnormality threshold, and the absolute value of the motor rotation speed is not less than the absolute value of the motor rotation speed threshold. The judgment result is in areas marked by 1, 4, 5, and 8 in a result distribution diagram shown in FIG. 4. Thus, the main control chip outputs the first short circuit signal.

$$\begin{cases} T_{a1} \geq T_r + \Delta \mathrm{T} \\ \mathrm{n}_1 < \mathrm{n}_t \end{cases} \quad \text{or} \quad \begin{cases} T_{a1} \leq -\left(T_r + \Delta T\right) \\ n_1 < -n_t \end{cases}$$

In the above case, the absolute value of the actual torque is not less than the absolute value of the torque abnormality threshold, and the absolute value of the motor rotation speed is less than the absolute value of the motor rotation speed threshold. The judgment result is in areas marked by 2, 3, 6 and 7 in the result distribution diagram shown in FIG. 4, so the main control chip outputs the first logic shut-off signal, the first buffer shut-off signal and the first drive shut-off signal.

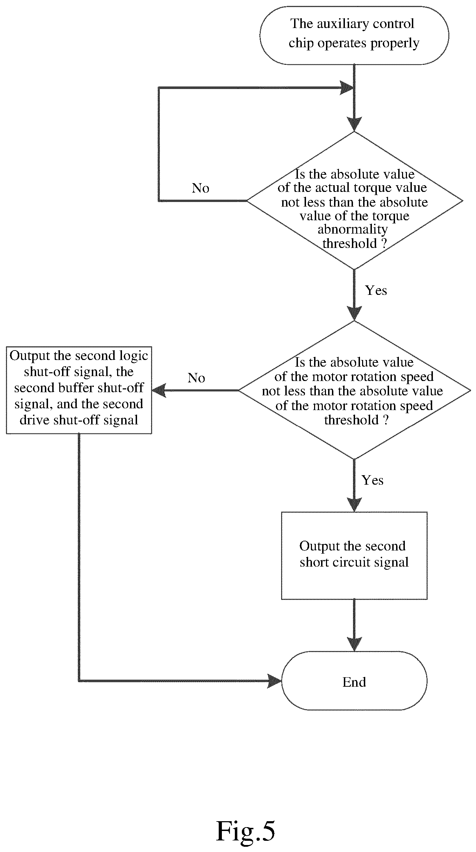

Similarly, the judgment logic of the auxiliary control chip is shown in FIG. 5. Different from the main control chip, the auxiliary control chip outputs the second short circuit signal, the second logic shut-off signal, the second buffer shut-off signal and the second drive shut-off signal. The judgment result of the auxiliary control chip is shown in the following formula:

$$\begin{cases} T_{a2} \geq T_r + \Delta T \\ n_2 \geq n_t \end{cases} \quad \text{or} \quad \begin{cases} T_{a2} \leq -\left(T_r + \Delta T\right) \\ n_2 \leq -n_t \end{cases}$$

where $T_{a2}$ is the actual torque of the motor determined by the auxiliary control chip and measured in Nm; $T_r$ is the torque request value and measured in Nm; $\Delta T$ is the torque deviation threshold and measured in Nm; $n_2$ is the motor rotation speed determined by the auxiliary control chip and measured in rpm; $n_t$ is the motor rotation speed threshold and measured in Nm. In the above case, the absolute value of the actual torque is not less than the absolute value of the torque abnormality threshold, and the absolute value of the motor rotation speed is not less than the absolute value of the motor rotation speed threshold. The judgment result is in areas marked by 1, 4, 5 and 8 in the result distribution diagram shown in FIG. 4. Thus, the auxiliary control chip outputs the second short circuit signal.

$$\begin{cases} T_{a2} \geq T_r + \Delta T \\ n_2 < n_t \end{cases} \quad \text{or} \quad \begin{cases} T_{a2} \leq -\left(T_r + \Delta T\right) \\ n_2 < -n_t \end{cases}$$

In the above case, the absolute value of the actual torque is not less than the absolute value of the torque abnormality threshold, and the absolute value of the motor rotation speed is less than the absolute value of the motor rotation speed threshold. The judgment result is in areas marked by 2, 3, 6 and 7 in the result distribution diagram shown in FIG. 4, so the auxiliary control chip outputs the second logic shut-off signal, the second buffer shut-off signal and the second drive shut-off signal.

An active short circuit drive circuit in the motor controller is configured to determine whether the first or second short circuit signal is received. If either one of the first or second short circuit signal is received, lower three bridges of a power module are all driven to be closed and upper three bridges of the power module are all driven to be opened, such that the vehicle power of the vehicle is shut off. If neither of the first or second short circuit signal is received, a first OR gate in the motor controller can judge whether the first or second logical shut-off signal is received, and a stop signal will be sent to the complex programmable logic device to stop it from sending a PWM pulse wave if either one of the first or second logical shut-off signal is received; a second OR gate can judge whether the first or second buffer shut-off signal is received, and the stop signal will be sent to the buffer device to stop it from sending the PWM pulse wave if either one of the first or second buffer shut-off signal is received; and a third OR gate can determine whether the first or second drive shut-off signal is received, and the stop signal will be sent to the drive device to stop it from sending the PWM pulse wave if either one of the first or second drive shut-off signal is received. Based on this, the motor controller can judge the first or second logical, buffer, and drive shut-off signals separately, further improving the reliability of the torque control.

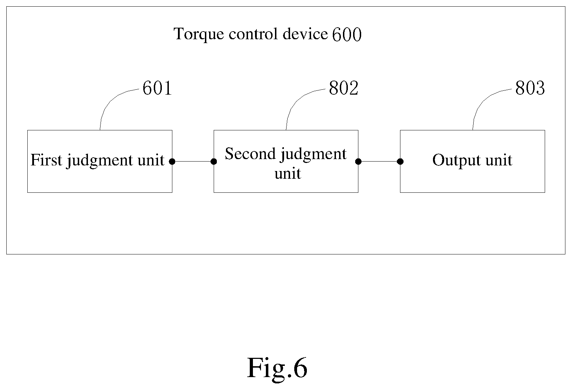

Based on the torque control method provided by the foregoing embodiments, a torque control device for controlling driving torque of an electric vehicle is provided by an embodiment of the invention. Refer to FIG. 6 which is a structural block diagram of the torque control device 600 provided by the embodiment of the invention, the device 600 including a first judgment unit 601, a second judgment unit 802, and an output unit 803:

the first judgment unit 601 is configured to perform a first judgment to judge whether a first shut-off signal sent by a first torque controller is obtained;
the second judgment unit 802 is configured to perform a second judgment to judge whether a second shut-off signal sent by a second torque controller is obtained; and
the output unit 803 is configured to output a first stop signal to stop outputting a torque if the judgment result of at least one of the first judgment and the second judgment is yes.

According to the invention, the first shut-off signal is generated by the steps of:

judging whether the absolute value of an actual torque value of a target vehicle is not less than the absolute value of a torque abnormality threshold by the first torque controller, wherein the torque abnormality threshold may be determined according to a torque request value and a torque deviation threshold; and
generating and sending out the first shut-off signal by the first torque controller if the absolute value of the actual torque value is not less than the absolute value of the torque abnormality threshold.

The second shut-off signal is generated by the steps of:

judging whether the absolute value of the actual torque value is not less than the absolute value of the torque abnormality threshold by the second torque controller; and
generating and sending out the second shut-off signal by the second torque controller if the absolute value of the actual torque value is not less than the absolute value of the torque abnormality threshold.

In a possible implemented way, the torque deviation threshold is determined according to electric vehicle parameters corresponding to the target vehicle.

According to the invention, the device 600 further includes a third judgment unit, a fourth judgment unit, and a conversion unit:

the third judgment unit is configured to perform a third judgment to judge whether a first short circuit signal sent by the first torque controller is obtained;
the fourth judgment unit is configured to perform a fourth judgment to judge whether a second short circuit signal sent by the second torque controller is obtained; and
the conversion unit is configured to convert the first stop signal into a second stop signal to shut off vehicle power of the target vehicle if the judgment result of at least one of the third judgment and the fourth judgment is yes.

According to the invention, the first short circuit signal is generated by the steps of:

judging whether the absolute value of an electric motor rotation speed of the target vehicle is not less than the absolute value of an electric motor rotation speed threshold by the first torque controller; and
generating the first short circuit signal if the absolute value of the motor rotation speed is not less than the absolute value of the motor rotation speed threshold.

The second short circuit signal is generated by the steps of: judging whether the absolute value of the motor rotation speed is not less than the absolute value of the motor rotation speed threshold by the second torque controller;

generating the second short circuit signal if the absolute value of the motor rotation speed is not less than the absolute value of the motor rotation speed threshold.

In a possible implementation, the motor rotation speed threshold is determined according to motor parameters of the target vehicle. In a possible implemented way, the first shut-off signal includes: any one or a combination of the first logic shut-off signal, the first buffer shut-off signal, and the first drive shut-off signal.

The second shut-off signal includes: any one or a combination of the second logic shut-off signal, the second buffer shut-off signal, and the second drive shut-off signal.

The output unit 803 is specifically configured such that:

if the first or second logic off signal is obtained, the first stop signal comprises a logic stop signal to stop a logic device from outputting a torque pulse;
if the first or second buffer shut-off signal is obtained, the first stop signal comprises a buffer stop signal to stop a buffer device from outputting the torque pulse; and
if the first or second drive shut-off signal is obtained, the first stop signal comprises a drive stop signal to stop a drive device from outputting the torque pulse.

Those of ordinary skill in the art can understand that all or part of the steps in the above method of the embodiments can be implemented by a hardware associated with program instructions stored in a computer readable storage medium. The steps of the above method of the embodiments are performed when the instructions are executed. The foregoing storage medium can be at least one of the following media: read-only memory (ROM), RAM, a magnetic disk, an optical disk, or a medium that can store program codes.

It should be noted that the various embodiments in the specification are described in a progressive manner, so the same or similar parts of the various embodiments can refer to each other, and each embodiment is illustrated mainly for its difference from the other embodiments. In particular, since the device and system embodiments are basically similar to the method embodiments, the related parts of the device and system embodiments are simply described and can be refered to those of the method embodiments. The above-described device and system embodiments are only illustrative. A unit described as a separate component may or may not be physically separated, and components shown as a unit may or may not form a physical unit, that is, the components may be located in one place or distributed in multiple network elements.

The above is only a specific embodiment of the invention, but the protection scope of the invention is not limited to this. Any person skilled in the art can easily conceive modifications.

The protection sought by this patent application extends to those modifications as long as they fall within the scope of the appended claims.

## Claims

1. A vehicle driving torque control method for controlling driving torque of an electric vehicle, wherein the method includes the steps of:

generating a first short circuit signal to be sent to a motor controller by a first torque controller if the first torque controller determines the absolute value of an actual torque value of a target vehicle is not less than the absolute value of a torque abnormality threshold and if the absolute value of a motor rotation speed of the target vehicle is not less than the absolute value of a motor rotation speed threshold;
generating a first shut-off signal to be sent to the motor controller by the first torque controller if the first torque controller determines the absolute value of the actual torque value of the target vehicle is not less than the absolute value of the torque abnormality threshold and if the absolute value of the motor rotation speed of the target vehicle is less than the absolute value of the motor rotation speed threshold;
generating a second short circuit signal to be sent to the motor controller by a second torque controller if the second torque controller determines the absolute value of the actual torque value of the target vehicle is not less than the absolute value of the torque abnormality threshold and if the absolute value of the motor rotation speed of the target vehicle is not less than the absolute value of the motor rotation speed threshold;
generating a second shut-off signal to be sent to the motor controller by the second torque controller if the second torque controller determines the absolute value of the actual torque value of the target vehicle is not less than the absolute value of the torque abnormality threshold and if the absolute value of the motor rotation speed of the target vehicle is less than the absolute value of the motor rotation speed threshold;
wherein the first and second short circuit signals are indicative of the present vehicle speed being in an excessively high state so that the electric vehicle power is required to be short circuited to decrease the vehicle speed to a stable state; and
performing a first judgment by the motor controller to judge whether the first shut-off signal sent by the first torque controller is obtained by the motor controller;
performing a second judgment by the motor controller to judge whether the second shut-off signal sent by the second torque controller is obtained by the motor controller;

performing a third judgment by the motor controller to judge whether the first short circuit signal sent by the first torque controller is obtained by the motor controller;

performing a fourth judgment by the motor controller to judge whether the second short circuit signal sent by the second torque controller is obtained by the motor controller; and

generating a first stop signal by the motor controller to stop outputting a torque if the judgment result of at least one of the first judgment and the second judgment is yes; and

converting the first stop signal into a second stop signal to shut off electric vehicle power of the target vehicle if the judgment result of at least one of the third judgment and the fourth judgment is yes.

2. The method of claim 1, **characterized in that** the torque abnormality threshold is determined according to a torque request value and a torque deviation threshold.

3. The method of claim 2, **characterized in that** the torque deviation threshold is determined according to electric vehicle parameters corresponding to the target vehicle.

4. The method of claim 1, **characterized in that** the motor rotation speed threshold is determined according to electric motor parameters of the target vehicle.

5. The method of claim 1, **characterized in that** the first shut-off signal comprises:

a first logic shut-off signal, a first buffer shut-off signal, and a first drive shut-off signal; and the second shut-off signal comprises:

a second logic shut-off signal, a second buffer shut-off signal, and a second drive shut-off signal; and the first stop signal comprises:

a logic stop signal to stop a logic device from outputting a torque pulse if the first logic shut-off signal or the second logic shut-off signal is obtained;

a buffer stop signal to stop a buffer device from outputting the torque pulse if the first buffer shut-off signal or the second buffer shut-off signal is obtained by the motor controller;

a drive stop signal to stop a drive device from outputting the torque pulse if the first drive shut-off signal or the second drive shut-off signal is obtained by the motor controller.

6. A vehicle driving torque control device for controlling driving torque of an electric vehicle, wherein the device comprises:

a first torque controller configured to:

generate a first short circuit signal to be sent to a motor controller if the first torque controller determines the absolute value of an actual torque value of a target vehicle is not less than the absolute value of a torque abnormality threshold and if the absolute value of a motor rotation speed of the target vehicle is not less than the absolute value of a motor rotation speed threshold; and

generate a first shut-off signal to be sent to the motor controller if the first torque controller determines the absolute value of the actual torque value of the target vehicle is not less than the absolute value of the torque abnormality threshold and if the absolute value of the motor rotation speed of the target vehicle is less than the absolute value of the motor rotation speed threshold;

a second torque controller configured to:

generate a second short circuit signal to be sent to the motor controller if the second torque controller determines the absolute value of the actual torque value of the target vehicle is not less than the absolute value of the torque abnormality threshold and if the absolute value of the motor rotation speed of the target vehicle is not less than the absolute value of the motor rotation speed threshold; and

generate a second shut-off signal to be sent to the motor controller if the second torque controller determines the absolute value of the actual torque value of the target vehicle is not less than the absolute value of the torque abnormality threshold and if the absolute value of the motor rotation speed of the target vehicle is less than the absolute value of the motor rotation speed threshold;

wherein the first and second short circuit signals are indicative of the present vehicle speed being in an excessively high state so that the electric vehicle power is required to be short circuited to decrease the vehicle speed to a stable state; and

a first judgment unit (601) configured to perform a first judgment to judge whether the first shut-off signal sent by the first torque controller is obtained by the motor controller;

a second judgment unit (802) configured to perform a second judgment to judge whether the second shut-off signal sent by the second torque controller is obtained by the motor controller;

a third judgment unit configured to perform a third judgment to judge whether the first short circuit signal sent by the first torque controller is obtained by the motor controller;

a fourth judgment unit configured to perform a fourth judgment to judge whether the second short circuit signal sent by the second torque controller is obtained by the motor controller;

an output unit (803) configured to generate a first stop signal to stop outputting a torque if the judgment result of at least one of the first judgment and the second judgment is yes; and a conversion unit configured to convert the first stop signal into a second stop signal to shut off electric vehicle power of the target vehicle if the judgment result of at least one of the third judgment and the fourth judgment is yes.

7. The device of claim 6, **characterized in that** the torque abnormality threshold is determined according to a torque request value and a torque deviation threshold.

8. The device of claim 7, **characterized in that** the torque deviation threshold is determined according to electric vehicle parameters corresponding to the target vehicle.

9. The device of claim 6, **characterized in that** the motor rotation speed threshold is determined according to motor parameters of the target vehicle.

10. The device of claim 6, **characterized in that** the first shut-off signal comprises:

    a first logic shut-off signal, a first buffer shut-off signal, and a first drive shut-off signal; and the second shut-off signal comprises:

    a second logic shut-off signal, a second buffer shut-off signal, and a second drive shut-off signal; and wherein the first stop signal comprises:

    a logic stop signal to stop a logic device from outputting a torque pulse if the first logic shut-off signal or the second logic shut-off signal is obtained by the motor controller;

a buffer stop signal to stop a buffer device from outputting the torque pulse if the first buffer shut-off signal or the second buffer shut-off signal is obtained by the motor controller; and

a drive stop signal to stop a drive device from outputting the torque pulse if the first drive shut-off signal or the second drive shut-off signal is obtained by the motor controller.

**Patentansprüche**

1. Verfahren zur Drehmomentregelung zur Steuerung des Antriebsmoments eines Elektrofahrzeugs, das Verfahren umfassend die Schritte:

    Erzeugen eines ersten Kurzschlusssignals, das von einem ersten Drehmomentregler an eine Motorsteuerung zu senden ist, wenn der erste Drehmomentregler feststellt, dass der Absolutwert eines Ist-Drehmomentwerts eines Zielfahrzeugs nicht kleiner ist als der Absolutwert einer Drehmoment-Anomalieschwelle, und wenn der Absolutwert einer Motordrehzahl des Zielfahrzeugs nicht kleiner ist als der Absolutwert einer Motordrehzahlschwelle;

    Erzeugen eines ersten Abschaltsignals, das von dem ersten Drehmomentregler an die Motorsteuerung zu senden ist, wenn der erste Drehmomentregler feststellt, dass der Absolutwert des Ist-Drehmomentwerts des Zielfahrzeugs nicht kleiner ist als der Absolutwert der Drehmoment-Anomalieschwelle, und wenn der Absolutwert der Motordrehzahl des Zielfahrzeugs kleiner ist als der Absolutwert der Motordrehzahlschwelle;

    Erzeugen eines zweiten Kurzschlusssignals, das von einem zweiten Drehmomentregler an die Motorsteuerung zu senden ist, wenn der zweite Drehmomentregler feststellt, dass der Absolutwert des Ist-Drehmomentwerts des Zielfahrzeugs nicht kleiner ist als der Absolutwert der Drehmoment-Anomalieschwelle, und wenn der Absolutwert der Motordrehzahl des Zielfahrzeugs nicht kleiner ist als der Absolutwert der Motordrehzahlschwelle;

    Erzeugen eines zweiten Abschaltsignals, das von dem zweiten Drehmomentregler an die Motorsteuerung zu senden ist, wenn der zweite Drehmomentregler feststellt, dass der Absolutwert des Ist-Drehmomentwerts des Zielfahrzeugs nicht kleiner ist als der Absolutwert der Drehmoment-Anomalieschwelle, und wenn der Absolutwert der Motordrehzahl des Zielfahrzeugs kleiner ist als der Absolutwert der Motordrehzahlschwelle;

wobei das erste und das zweite Kurzschlusssignal darauf hinweisen, dass die vorliegende Motordrehzahl in einem übermäßig hohen Zustand ist, so dass die Stromversorgung des Elektrofahrzeugs kurzgeschlossen werden muss, um die Fahrzeuggeschwindigkeit auf einen stabilen Zustand zu senken; und

Durchführen einer ersten Beurteilung durch die Motorsteuerung, um zu beurteilen, ob das von dem ersten Drehmomentregler gesendete erste Abschaltsignal von der Motorsteuerung erhalten wird;

Durchführen einer zweiten Beurteilung durch die Motorsteuerung, um zu beurteilen, ob das von dem zweiten Drehmomentregler gesendete zweite Abschaltsignal von der Motorsteuerung erhalten wird;

Durchführen einer dritten Beurteilung durch die Motorsteuerung, um zu beurteilen, ob das von dem ersten Drehmomentregler gesendete erste Kurzschlusssignal von der Motorsteuerung erhalten wird;

Durchführen einer vierten Beurteilung durch die Motorsteuerung, um zu beurteilen, ob das von dem zweiten Drehmomentregler gesendete zweite Kurzschlusssignal von der Motorsteuerung erhalten wird;

Erzeugen eines ersten Stoppsignals durch die Motorsteuerung, um die Drehmomentabgabe zu stoppen, wenn das Beurteilungsergebnis von mindestens einer der ersten Beurteilung und der zweiten Beurteilung Ja lautet; und

Konvertieren des ersten Stoppsignals in ein zweites Stoppsignal, um den Elektrofahrzeugstrom des Zielfahrzeugs abzuschalten, wenn das Beurteilungsergebnis von mindestens einer der dritten Beurteilung und der vierten Beurteilung Ja lautet.

2. Verfahren nach Anspruch 1, **dadurch gekennzeichnet, dass** die Drehmoment-Anomalieschwelle nach einem Drehmoment-Anforderungswert und einer Drehmoment-Abweichungsschwelle bestimmt wird.

3. Verfahren nach Anspruch 2, **dadurch gekennzeichnet, dass** die Drehmoment-Abweichungsschwelle nach den Parametern des Elektromotors, die dem Zielfahrzeug entsprechen, bestimmt wird.

4. Verfahren nach Anspruch 1, **dadurch gekennzeichnet, dass** die Motordrehzahlschwelle nach den Parametern des Elektromotors des Zielfahrzeugs bestimmt wird.

5. Verfahren nach Anspruch 1, **dadurch gekennzeichnet, dass** das erste Abschaltsignal umfasst:

ein erstes logisches Abschaltsignal, ein erstes Pufferabschaltsignal und ein erstes Antriebsabschaltsignal;
und dass das zweite Abschaltsignal umfasst:

ein zweites logisches Abschaltsignal, ein zweites Pufferabschaltsignal und ein zweites Antriebsabschaltsignal;
und dass das erste Stoppsignal umfasst:

ein logisches Stoppsignal, das die logische Schaltung von der Ausgabe eines Drehmomentimpulses abhält, wenn das erste logische Abschaltsignal oder das zweite logische Abschaltsignal erhalten wird;
ein Pufferstoppsignal, das eine Puffereinrichtung von der Ausgabe des Drehmomentimpulses abhält, wenn das erste Pufferabschaltsignal oder das zweite Pufferabschaltsignal von der Motorsteuerung erhalten wird;
ein Antriebsstoppsignal, das eine Antriebseinrichtung von der Ausgabe des Drehmomentimpulses abhält, wenn das erste Antriebsabschaltsignal oder das zweite Antriebsabschaltsignal von der Motorsteuerung erhalten wird.

6. Vorrichtung zur Drehmomentregelung zur Steuerung des Antriebsmoments eines Elektrofahrzeugs, die Vorrichtung umfassend:
einen ersten Drehmomentregler, der dazu eingerichtet ist:

ein erstes Kurzschlusssignal zu erzeugen, das an eine Motorsteuerung zu senden ist, wenn der erste Drehmomentregler feststellt, dass der Absolutwert eines Ist-Drehmomentwerts eines Zielfahrzeugs nicht kleiner ist als der Absolutwert einer Drehmoment-Anomalieschwelle, und wenn der Absolutwert einer Motordrehzahl des Zielfahrzeugs nicht kleiner ist als der Absolutwert einer Motordrehzahlschwelle;
ein erstes Abschaltsignals zu erzeugen, das an die Motorsteuerung zu senden ist, wenn der erste Drehmomentregler feststellt, dass der Absolutwert des Ist-Drehmomentwerts des Zielfahrzeugs nicht kleiner ist als der Absolutwert der Drehmoment-Anomalieschwelle, und wenn der Absolutwert der Motordrehzahl des Zielfahrzeugs kleiner ist als der Absolutwert der Motordrehzahlschwelle;
einen zweiten Drehmomentregler, der dazu eingerichtet ist:

ein zweites Kurzschlusssignal zu erzeugen, das an die Motorsteuerung zu senden ist, wenn der zweite Drehmomentregler feststellt, dass der Absolutwert des Ist-Drehmomentwerts des Zielfahrzeugs nicht kleiner ist als der Absolutwert der Drehmoment-Anomalieschwelle, und wenn der Absolutwert der Motordrehzahl des Zielfahrzeugs nicht kleiner ist als der Absolutwert der Motordrehzahlschwelle;

ein zweites Abschaltsignal zu erzeugen, das an die Motorsteuerung zu senden ist, wenn der zweite Drehmomentregler feststellt, dass der Absolutwert des Ist-Drehmomentwerts des Zielfahrzeugs nicht kleiner ist als der Absolutwert der Drehmoment-Anomalieschwelle, und wenn der Absolutwert der Motordrehzahl des Zielfahrzeugs kleiner ist als der Absolutwert der Motordrehzahlschwelle;

wobei das erste und das zweite Kurzschlusssignal darauf hinweisen, dass die vorliegende Motordrehzahl in einem übermäßig hohen Zustand ist, so dass die Stromversorgung des Elektrofahrzeugs kurzgeschlossen werden muss, um die Fahrzeuggeschwindigkeit auf einen stabilen Zustand zu senken;

und umfassend

eine erste Beurteilungseinheit (601) die dazu eingerichtet ist, eine erste Beurteilung durchzuführen, um zu beurteilen, ob das von dem ersten Drehmomentregler gesendete erste Abschaltsignal von der Motorsteuerung erhalten wird;

eine zweite Beurteilungseinheit (802) die dazu eingerichtet ist, eine zweite Beurteilung durchzuführen, um zu beurteilen, ob das von dem zweiten Drehmomentregler gesendete zweite Abschaltsignal von der Motorsteuerung erhalten wird;

eine dritte Beurteilungseinheit, die dazu eingerichtet ist, eine dritte Beurteilung durchzuführen, um zu beurteilen, ob das von dem ersten Drehmomentregler gesendete erste Kurzschlusssignal von der Motorsteuerung erhalten wird;

eine vierte Beurteilungseinheit, die dazu eingerichtet ist, eine vierte Beurteilung durchzuführen, um zu beurteilen, ob das von dem zweiten Drehmomentregler gesendete zweite Kurzschlusssignal von der Motorsteuerung erhalten wird;

eine Ausgabeeinheit (803), die dazu eingerichtet ist, ein erstes Stoppsignal zu erzeugen, um die Ausgabe eines Drehmoments zu stoppen, wenn das Beurteilungsergebnis von mindestens einer der ersten Beurteilung und der zweiten Beurteilung Ja lautet; und eine Konversionseinheit, die dazu eingerichtet ist, das erste Stoppsignal in ein zweites Stoppsignal zu konvertieren, um den Elektrofahrzeugstrom des Zielfahrzeugs abzuschalten, wenn das Beurteilungsergebnis von mindestens einer der dritten Beurteilung und der vierten Beurteilung Ja lautet.

**7.** Vorrichtung nach Anspruch 6, **dadurch gekennzeichnet, dass** die Drehmoment-Anomalieschwelle nach einem Drehmomentanforderungswert und einer Drehmoment-Abweichungsschwelle bestimmt wird.

**8.** Vorrichtung nach Anspruch 7, **dadurch gekennzeichnet, dass** die Drehmoment-Abweichungsschwelle nach den Parametern des Elektromotors, die dem Zielfahrzeug entsprechen, bestimmt wird.

**9.** Vorrichtung nach Anspruch 6, **dadurch gekennzeichnet, dass** die Motordrehzahlschwelle nach den Motorparametern des Zielfahrzeugs bestimmt wird.

**10.** Vorrichtung nach Anspruch 6, **dadurch gekennzeichnet, dass** das erste Abschaltsignal umfasst:

ein erstes logisches Abschaltsignal, ein erstes Pufferabschaltsignal und ein erstes Antriebsabschaltsignal;

und dass das zweite Abschaltsignal umfasst:

ein zweites logisches Abschaltventil, ein zweites Pufferabschaltventil und ein zweites Antriebsabschaltventil;

wobei das erste Stoppsignal umfasst:

ein logisches Stoppsignal, das die logische Schaltung von der Ausgabe eines Drehmomentimpulses abhält, wenn das erste logische Abschaltsignal oder das zweite logische Abschaltsignal von der Motorsteuerung erhalten wird;

ein Pufferstoppsignal, das eine Puffereinrichtung von der Ausgabe des Drehmomentimpulses abhält, wenn das erste Pufferabschaltsignal oder das zweite Pufferabschaltsignal von der Motorsteuerung erhalten wird;

ein Antriebsstoppsignal, das eine Antriebseinrichtung von der Ausgabe des Drehmomentimpulses abhält, wenn das erste Antriebsabschaltsignal oder das zweite Antriebsabschaltsignal von der Motorsteuerung erhalten wird.

## Revendications

1. Procédé de réglage de couple pour régler le couple moteur d'un véhicule électrique, le procédé comprenant les étapes suivantes:

   générer un premier signal de court-circuit qui doit être envoyé par un premier régulateur de couple à un dispositif de commande de moteur lorsque le premier régulateur de couple détermine que la valeur absolue d'une valeur de couple réel d'un véhicule cible n'est pas inférieure à la valeur absolue d'un seuil d'anomalie de couple, et lorsque la valeur absolue d'une vitesse de rotation du moteur du véhicule cible n'est pas inférieure à la valeur absolue d'un seuil de vitesse de rotation du moteur;
   générer un premier signal de coupure qui doit être envoyé par le premier régulateur de couple au dispositif de commande de moteur lorsque le premier régulateur de couple détermine que la valeur absolue de la valeur de couple réelle du véhicule cible n'est pas inférieure à la valeur absolue du seuil d'anomalie de couple, et lorsque la valeur absolue de la vitesse de rotation du moteur du véhicule cible est inférieure à la valeur absolue du seuil de vitesse de rotation du moteur;
   générer un deuxième signal de court-circuit, qui doit être envoyé par un deuxième régulateur de couple au dispositif de commande de moteur lorsque le deuxième régulateur de couple détermine que la valeur absolue de la valeur de couple réelle du véhicule cible n'est pas inférieure à la valeur absolue du seuil d'anomalie de couple et lorsque la valeur absolue de la vitesse de rotation du moteur du véhicule cible n'est pas inférieure à la valeur absolue du seuil de vitesse de rotation du moteur;
   générer un deuxième signal de coupure qui doit être envoyé par le deuxième régulateur de couple au dispositif de commande de moteur lorsque le deuxième régulateur de couple détermine que la valeur absolue de la valeur de couple réelle du véhicule cible n'est pas inférieure à la valeur absolue du seuil d'anomalie de couple, et lorsque la valeur absolue de la vitesse de rotation du moteur du véhicule cible est inférieure à la valeur absolue du seuil de régime moteur;
   le premier et le deuxième signal de court-circuit indiquant que la vitesse actuelle du véhicule est dans un état trop élevé, de sorte que l'alimentation électrique du véhicule électrique doit être courtcircuitée afin de réduire la vitesse du véhicule à un état stable;
   et comprenant les étapes suivantes:

   effectuer une première évaluation par le dispositif de commande de moteur afin d'évaluer si le premier signal de coupure envoyé par le premier régulateur de couple est obtenu par le dispositif de commande de moteur;
   effectuer une deuxième évaluation par le dispositif de commande de moteur afin d'évaluer si le deuxième signal de coupure envoyé par le deuxième régulateur de couple est obtenu par le dispositif de commande de moteur;
   effectuer une troisième évaluation par le dispositif de commande de moteur afin de déterminer si le premier signal de court-circuit envoyé par le premier régulateur de couple est obtenu par le dispositif de commande de moteur;
   effectuer une quatrième évaluation par le dispositif de commande de moteur afin de déterminer si le deuxième signal de court-circuit envoyé par le deuxième régulateur de couple est obtenu par le dispositif de commande de moteur;
   générer un premier signal d'arrêt par le dispositif de commande de moteur afin d'arrêter la fourniture de couple lorsque le résultat de l'évaluation d'au moins l'une des première et deuxième évaluations est oui; et
   convertir le premier signal d'arrêt en un deuxième signal d'arrêt afin de couper le courant électrique du véhicule cible lorsque le résultat de l'évaluation d'au moins l'une des troisième et quatrième évaluations est oui.

2. Procédé selon la revendication 1, **caractérisé en ce que** le seuil d'anomalie de couple est déterminé en fonction d'une valeur de demande de couple et d'un seuil d'écart de couple.

3. Procédé selon la revendication 2, **caractérisé en ce que** le seuil d'écart de couple est déterminé en fonction des paramètres du moteur électrique correspondant au véhicule cible.

4. Procédé selon la revendication 1, **caractérisé en ce que** le seuil de vitesse de rotation du moteur est déterminé en fonction des paramètres du moteur électrique du véhicule cible.

5. Procédé selon la revendication 1, **caractérisé en ce que** le premier signal de coupure comprend:

   un premier signal de coupure logique, un premier signal de coupure tampon et un premier signal de coupure d'entraînement;

et **en ce que** le deuxième signal de coupure comprend:

un deuxième signal de coupure logique, un deuxième signal de coupure tampon et un deuxième signal de coupure d'entraînement;

et **en ce que** le premier signal d'arrêt comprend:

un signal d'arrêt logique qui empêche un circuit logique d'émettre une impulsion de couple lorsque le premier signal de coupure logique ou le deuxième signal de coupure logique est obtenu; un signal d'arrêt de tampon qui empêche un dispositif tampon d'émettre l'impulsion de couple lorsque le premier signal de coupure de tampon ou le deuxième signal de coupure de tampon est obtenu par le dispositif de commande de moteur; un signal d'arrêt d'entraînement qui empêche un dispositif d'entraînement d'émettre l'impulsion de couple lorsque le premier signal de coupure d'entraînement ou le deuxième signal de coupure d'entraînement est obtenu par le dispositif de commande de moteur.

6. Dispositif de régulation du couple pour commander le couple d'entraînement d'un véhicule électrique, le dispositif comprenant:
un premier régulateur de couple qui est conçu pour:

générer un premier signal de court-circuit à envoyer à un dispositif de commande de moteur lorsque le premier régulateur de couple détermine que la valeur absolue d'une valeur de couple réelle d'un véhicule cible n'est pas inférieure à la valeur absolue d'un seuil d'anomalie de couple, et lorsque la valeur absolue d'une vitesse de rotation du moteur du véhicule cible n'est pas inférieure à la valeur absolue d'un seuil de vitesse de rotation du moteur; générer un premier signal de coupure à envoyer au dispositif de commande de moteur lorsque le premier régulateur de couple détermine que la valeur absolue de la valeur de couple réelle du véhicule cible n'est pas inférieure à la valeur absolue du seuil d'anomalie de couple, et lorsque la valeur absolue de la vitesse de rotation du moteur du véhicule cible est inférieure à la valeur absolue du seuil de la vitesse de rotation du moteur;
un deuxième régulateur de couple qui est conçu pour:

générer un deuxième signal de court-circuit qui doit être envoyé au dispositif de commande de moteur lorsque le deuxième régulateur de couple détermine que la valeur absolue de la valeur de couple réelle du véhicule cible n'est pas inférieure à la valeur absolue du seuil d'anomalie de couple, et lorsque la valeur absolue de la vitesse de rotation du moteur du véhicule cible n'est pas inférieure à la valeur absolue du seuil de vitesse de rotation du moteur; générer un deuxième signal de coupure à envoyer au dispositif de commande de moteur lorsque le deuxième régulateur de couple détermine que la valeur absolue de la valeur réelle du couple du véhicule cible n'est pas inférieure à la valeur absolue du seuil d'anomalie du couple, et lorsque la valeur absolue de la vitesse de rotation du moteur du véhicule cible est inférieure à la valeur absolue du seuil de la vitesse de rotation du moteur; les premier et deuxième signaux de court-circuit indiquant que la vitesse actuelle du véhicule est dans un état trop élevé, de sorte que l'alimentation électrique du véhicule électrique doit être courtcircuitée afin de réduire la vitesse du véhicule à un état stable; et comprenant une première unité d'évaluation (601) qui est conçue pour effectuer une première évaluation afin de déterminer si le premier signal de coupure envoyé par le premier régulateur de couple est obtenu par le dispositif de commande de moteur; une deuxième unité d'évaluation (802) qui est conçue pour effectuer une deuxième évaluation afin de déterminer si le deuxième signal de coupure envoyé par le deuxième régulateur de couple est obtenu par le dispositif de commande de moteur; une troisième unité d'évaluation, qui est conçue pour effectuer une troisième évaluation afin de déterminer si le premier signal de court-circuit envoyé par le premier régulateur de couple est obtenu par le dispositif de commande de moteur; une quatrième unité d'évaluation qui est conçue pour effectuer une quatrième évaluation afin de déterminer si le deuxième signal de court-circuit envoyé par le deuxième régulateur de couple est obtenu par le dispositif de commande de moteur; une unité de sortie (803) qui est conçue pour générer un premier signal d'arrêt afin d'arrêter la sortie d'un couple, lorsque le résultat de l'évaluation d'au moins l'une des première et deuxième évaluations est oui; et une unité de conversion qui est conçue pour convertir le premier signal d'arrêt en un deuxième signal d'arrêt afin de couper le courant électrique du véhicule cible lorsque le résultat de l'évaluation d'au moins l'une des troisième et quatrième évaluations est oui.

7. Dispositif selon la revendication 6, **caractérisé en ce que** le seuil d'anomalie de couple est déterminé en fonction d'une valeur de demande de couple et d'un seuil d'écart de couple.

8. Dispositif selon la revendication 7, **caractérisé en ce que** le seuil d'écart de couple est déterminé en fonction des paramètres du moteur électrique correspondant au véhicule cible.

9. Dispositif selon la revendication 6, **caractérisé en ce que** le seuil de vitesse de rotation du moteur est déterminé en fonction des paramètres du moteur du véhicule cible.

10. Dispositif selon la revendication 6, **caractérisé en ce que** le premier signal de coupure comprend:

un premier signal de coupure logique, un premier signal de coupure tampon et un premier signal de coupure d'entraînement;
et **en ce que** le deuxième signal de coupure comprend:

un deuxième signal de coupure logique, un deuxième signal de coupure tampon et un deuxième signal de coupure d'entraînement;
le premier signal d'arrêt comprenant:

un signal d'arrêt logique qui empêche un dispositif logique de l'émission d'une impulsion de couple lorsque le premier signal de coupure logique ou le deuxième signal de coupure logique est obtenu par le dispositif de commande de moteur;
un signal d'arrêt de tampon qui empêche un dispositif tampon de l'émission de l'impulsion de couple lorsque le premier signal de coupure de tampon ou le deuxième signal de coupure de tampon est obtenu par le dispositif de commande de moteur; et
un signal d'arrêt d'entraînement qui empêche un dispositif d'entraînement d'émettre l'impulsion de couple lorsque le premier signal de coupure d'entraînement ou le deuxième signal de coupure d'entraînement est obtenu par le dispositif de commande de moteur.

Perform a first judgment — S101

Perform a second judgment — S102

Output a first stop signal if the judgment result of at least one of the first judgment and the second judgment is yes — S103

Fig.1

Rotor position sensor

Motor

Power battery

Motor controller

Main control chip

Auxiliary control chip

Current sensor

Power device

Drive device

Buffer device

Complex programmable logic device

First OR gate

Second OR gate

Third OR gate

Active short circuit drive circuit

Vehicle controller

High voltage

Rotor position signal

Three-phase current signal

Rotor position signal

Three-phase current signal

Three-phase current

Three-phase current signal

Rotor position signal

PWM

PWM

PWM

PWM

First enable signal

Second enable signal

Third enable signal

First logic shut-off signal

First buffer shut-off signal

First drive shut-off signal

First short circuit signal

Second logic shut-off signal

Second buffer shut-off signal

Second drive shut-off signal

Second short circuit signal

Torque request

Fig.2

The main control chip
operates properly

Is the absolute value
of the actual torque value
not less than the absolute
value of the torque
abnormality
threshold ?

No

Yes

Is the absolute value
of the motor rotation speed
not less than the absolute
value of the motor rotation
speed threshold ?

No

Output the first logic
shut-off signal, the first
buffer shut-off signal,
and the first drive
shut-off signal

Yes

Output the first
short circuit signal

End

Fig.3

Fig.4

The auxiliary control chip operates properly

Is the absolute value of the actual torque value not less than the absolute value of the torque abnormality threshold ?

No

Yes

Is the absolute value of the motor rotation speed not less than the absolute value of the motor rotation speed threshold ?

No

Output the second logic shut-off signal, the second buffer shut-off signal, and the second drive shut-off signal

Yes

Output the second short circuit signal

End

Fig.5

Torque control device 600

601

802

803

First judgment unit ● —— ● Second judgment unit ● —— ● Output unit

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017066326 A1